# EUROPEAN PATENT SPECIFICATION

(11) **EP 3 372 797 B1**
(45) Date of publication and mention of the grant of the patent: **11.12.2019**
(21) Application number: 17159416.1
(22) Date of filing: 06.03.2017
(51) Int. Cl.: F01N 3/20

(54) **EXHAUST GAS AFTERTREATMENT SYSTEM**
ABGASNACHBEHANDLUNGSSYSTEM
SYSTÈME DE POST-TRAITEMENT DE GAZ D'ÉCHAPPEMENT

(43) Date of publication of application: 12.09.2018
(73) Proprietor: Volvo Car Corporation, 40 531 Göteborg (SE)
(72) Inventor: Sandberg, Peter, 41743 Göteborg (SE); Stenfeldt, M. Marie, 43537 Göteborg (SE)
(74) Representative: Kransell & Wennborg KB

(56) References cited:
- EP-A1- 1 936 137
- EP-A2- 2 484 877
- DE-A1-102011 116 227
- US-A1- 2016 348 560

## Description

### TECHNICAL FIELD

This invention relates to an exhaust gas aftertreatment system for an internal combustion engine according to the preamble of claim 1. In particular, the invention relates to evaporation of liquid reductant at low temperature conditions.

### BACKGROUND OF THE INVENTION

To fulfil current emission legislations, most vehicles with internal combustion engines are today provided with an exhaust gas aftertreatment device comprising a catalytic converter arranged in an exhaust duct for reduction of exhaust gas emissions. The catalytic converter generally consists of a tubular, longitudinal body with an inlet and an outlet, where the inlet is in fluid communication with the outlet. The catalytic converter usually comprises at least one catalytic converter substrate in a channelled structure arranged between the inlet and outlet. Exhaust gases can pass through the channelled structure while being exposed to a large surface area of the catalytic converter. The inlet of the catalytic converter receives exhaust gas emissions from the internal combustion engine and the outlet is arranged for discharging exhaust gas emissions treated in the catalytic converter.

The most frequently used catalytic converter structure for petrol engines is generally Three Way Catalyst (TWC). For diesel engines generally Diesel Oxidation Catalyst (DOC) and Lean NOx Trap (LNT) are most frequently used. It is also common that the above mentioned catalytic converter structures are supplemented by a catalytic nitrogen oxide (NOx) converter, such as a substrate with selective catalytic reduction (SCR) functionality for improved NOx reduction. For substrates with SCR functionality, a liquid or gaseous reductant is introduced in the gas emission flow upstream the SCR substrate so that the reductant can mix with the exhaust gas emissions before reaching the SCR substrate.

When using liquid reductant, such as a urea solution ("AdBlue"), the liquid reductant is sprayed into the exhaust duct upstream the catalytic NOx converter so that the liquid reductant can evaporate and mix with the exhaust gases before entering the catalytic NOx converter. Heat transferred from the exhaust gases is used for evaporating the liquid reductant. Sufficient mixture of the reductant is important for optimal reduction of NOx in the SCR substrate and for the SCR substrate to work properly.

Conventional SCR exhaust gas aftertreatment systems commonly work well during normal operation conditions when the exhaust gas temperature is relatively high. However, a disadvantage of conventional SCR exhaust gas aftertreatment systems is that the liquid reductant is not evaporated sufficiently at lower temperature levels, i.e. typically in low-load situations common for, for instance, light-duty vehicles with low fuel consumption. This might lead to wetting of the walls in the exhaust duct and reduction deposit formation on the walls and other components of the exhaust duct.

A common solution to this problem is to use engine measures to raise the temperature in the exhaust gas system, such as fuel post injection (i.e. late injection of fuel for utilizing the combustion heat in the exhaust gas system). Main disadvantage of such measures are increased fuel consumption, oil dilution and formation of soot in the oil.

US9464558 discloses another solution where the exhaust system is locally heated by means of an electric heater. A disadvantage of this solution is that the heater requires power, which typically leads to increased fuel consumption. Further solutions for improving the evaporation of reductant are disclosed in EP 1936137 A1, EP 2484877 A2, US 2016/0348560 A1 or DE 102011116227 A1.

There is thus a need for an improved SCR exhaust gas aftertreatment device adapted to low temperature conditions.

### SUMMARY OF THE INVENTION

An object of this invention is to provide an exhaust gas aftertreatment system for an internal combustion engine that exhibit improved properties compared to conventional systems to evaporate a liquid reductant, in particular in low-temperature situations. This object is achieved by the system defined by the technical features contained in claim 1. The dependent claims contain advantageous embodiments, further developments and variants of the invention.

The invention concerns an exhaust gas aftertreatment system for an internal combustion engine, said system comprising: an exhaust duct allowing a through-flow of exhaust gas; a catalytic NOx converter arranged in the exhaust duct; and a fluid inlet arranged to introduce a liquid reductant into in the exhaust duct upstream the catalytic NOx converter.

The invention is characterized in that the system further comprises: a reductant evaporator element arranged in the exhaust duct, wherein the fluid inlet and the reductant evaporator are arranged in relation to each other so that the reductant is introduced in a direction towards said evaporator element; a heat absorbing element arranged in the exhaust duct at a distance from the evaporator element in a position where the temperature is higher than at the position of the evaporator during operation of the internal combustion engine; and a heat transfer element thermally connected to the heat adsorbing element and the evaporator element so as to be capable of transferring heat from the heat adsorbing element to the evaporator element during operation of the internal combustion engine.

Such a design has the advantageous effect of being capable of making use of inherent temperature variations in the exhaust gas system by transferring heat from locations where the temperature is higher (during operation of the engine) to the evaporator element so as to make the evaporation more efficient. In many applications it is not possible for various reasons, such as lack of space or too high a temperature for the injector, to place the reductant evaporator element at the hotter locations. According to the invention, this heat can be still be used by transferring it via the heat transfer element to the evaporator.

Conventionally, a great deal of the heat at high-temperature locations is lost via the outer wall of the exhaust duct. A portion of this "free" heat can now instead be used to enhance evaporation of the reductant.

High-temperature locations can typically be found in bends and curves of the exhaust duct. Such bends are common in compact exhaust gas systems.

The invention is of particular interest in situations where the engine works at a low load, such as city driving, where the exhaust gas temperature is low and the mass flow small. In SCR applications the low temperatures limits the possibility to dose liquid reductant. Minimum temperature for liquid reductant dosing in conventional systems is approx.180-200°C. The SCR catalyst is, however, active from around 150°C. Conventionally, there is thus a gap in the temperature window between dosing of liquid reductant and catalyst activity. This gap can be reduced or even eliminated by transferring heat to the evaporator as described here.

The advantages of the invention may be summarized as follows:
- Improved heat transfer to reductant evaporation zone
- Faster evaporation of the liquid reductant
- Reduced risk for wall wetting and deposit formation
- Increased packaging flexibility in the liquid reductant supply and mixing area
- Mixing length downstream evaporator becomes less critical
- Lower fuel consumption compared to the use of engine measures for increasing the temperature in the evaporation zone
- Makes it possible to dose liquid reductant at low exhaust gas temperatures and increase the NOx conversion at low load conditions.
- Preheating period before liquid reductant dosing can be decreased.

According to the invention the heat absorbing element is arranged upstream the evaporator element. In most cases the temperature of the exhaust gas is higher in the upstream direction. Preferably, the heat absorbing element is arranged in association with a bend or curve of the exhaust duct. The outer part of such a bend or curve is particularly exposed to the flow of exhaust gas and the temperature in such a position is therefore usually higher than at straight parts of the exhaust duct. Sensors or computer simulations may be used to find the expected temperature at different positions of the exhaust duct during operation of the engine in a particular application. The position of the heat absorbing element can be chosen after having conducted such experiments and/or simulations.

In an embodiment of the invention the heat absorbing element comprises a substantially flat part that extends along an outer wall of the exhaust duct. Preferably, a heat insulating arrangement is provided between the heat absorbing element and an outer wall of the exhaust duct. Placement of such an element along the outer wall is often efficient for absorbing the highest temperature and for avoiding disturbance of the flow of exhaust gas. The heat insulator prevents heat loss via the outer wall.

According to the invention the heat transfer element substantially extends in the longitudinal direction of the exhaust duct.

In an embodiment of the invention the evaporator element is arranged in association with an outer wall of the exhaust duct, preferably a heat insulator arrangement is provided between the evaporator element and the outer wall of the exhaust duct. This prevents heat loss.

In an embodiment of the invention the fluid inlet is arranged in association with an outer wall of the exhaust duct.

In an embodiment of the invention the evaporator and the fluid inlet are arranged on opposite sides of the exhaust duct.

In an embodiment of the invention the fluid inlet is configured to introduce the reductant in a direction across the exhaust duct. Preferably, the fluid inlet is a nozzle configured to spray reductant into the exhaust duct. Some reductant may thereby evaporate already before hitting the evaporator element.

According to the invention the heat transfer element comprises guiding fins configured to guide the flow of exhaust gas towards the evaporator element. Besides transferring heat, such fins can be used to provide an advantageous flow pattern at the evaporator element. Preferably, the guiding fins extend downstream the evaporator element. Besides transferring heat also downstream the evaporator and thus enhance evaporation for this reason, such fins can be used to i) create a turbulent flow of exhaust gas that increases mixing and makes evaporation more efficient and/or to ii) delay the transport of any remaining droplets of reductant and thereby improve evaporation.

### BRIEF DESCRIPTION OF DRAWINGS

In the description of the invention given below reference is made to the following figure, in which:
- Figure 1: shows, in a schematic view, a first embodiment of an exhaust gas aftertreatment system according to the invention,
- Figure 2: shows, in a schematic view, some components of the system shown in figure 2, and
- Figure 3: shows, in a schematic view, a second embodiment of an exhaust gas aftertreatment system according to the invention.

### DESCRIPTION OF EXAMPLE EMBODIMENTS OF THE INVENTION

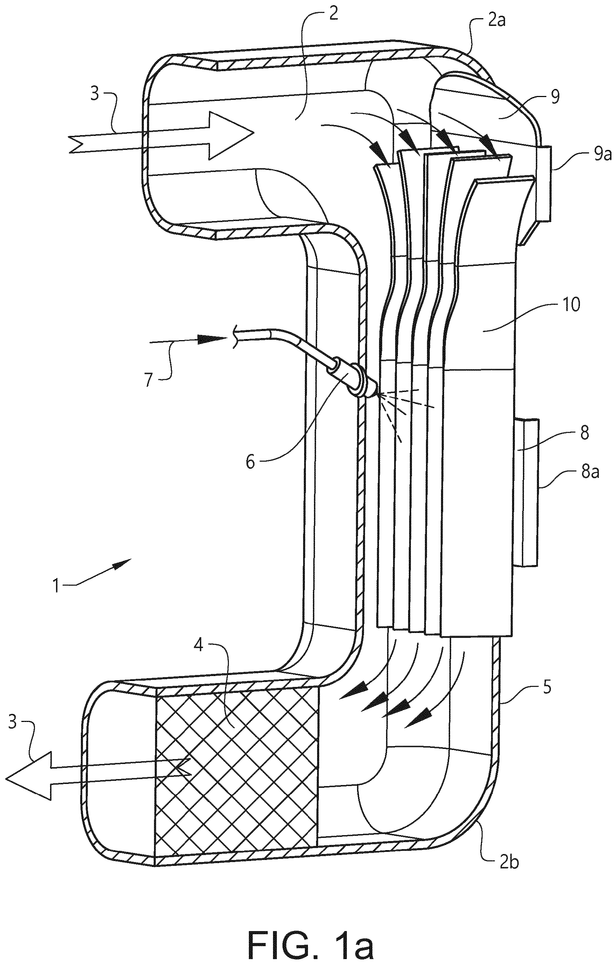

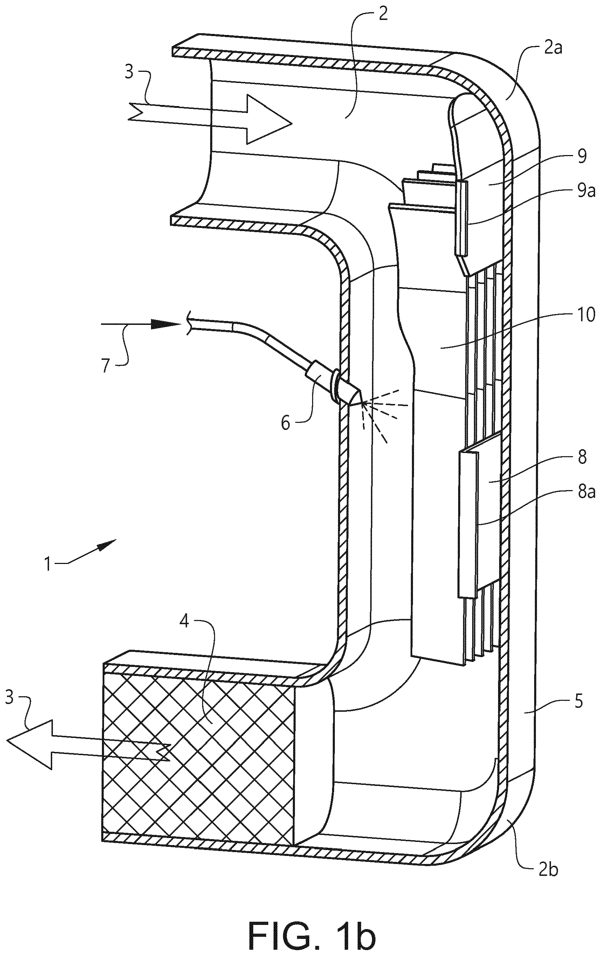

Figure 1 shows a schematic view of a first embodiment of an exhaust gas aftertreatment system 1 for an internal combustion engine. The system comprises an exhaust duct 2, defined by an outer wall 5, allowing a through-flow of exhaust gas. The general flow direction of the exhaust is in the longitudinal direction of the exhaust duct 2 as indicated by arrows 3. The exhaust gas is generated by an internal combustion engine (not shown in the figures).

The exhaust duct 2 has a first and a second bend 2a, 2b, which in this case is 90° each. Such bends are often required to fit the system 1 into the limited space available in a state-of-the-art automobile.

The system 1 further comprises a catalytic NOx converter 4 arranged in the exhaust duct, a fluid inlet 6 in the form of a nozzle arranged to introduce a liquid reductant into the exhaust duct 2 upstream the catalytic NOx converter 4. Liquid reductant is fed to the nozzle 6 via a feed line 7 and is sprayed (indicated by dashed lines) into the exhaust duct 2.

A reductant evaporator element 8 is arranged in the exhaust duct. The fluid inlet nozzle 6 and the reductant evaporator 8 are arranged in relation to each other, in this case in association with opposite walls 5 of the exhaust duct 2, so that the reductant is sprayed in a direction towards the evaporator element 8. Reductant that is not evaporated during the passage across the exhaust gas 2 will thus hit the evaporator element 8, which thus works as droplet stop shield.

A heat absorbing element 9 is arranged in the exhaust duct 2 at a distance upstream of the evaporator element 8 in a position where the temperature is expected to be higher than at the position of the evaporator element 8 during operation of the internal combustion engine. More particularly, the heat absorbing element 9 is located at the outer curve of the first bend 2a of the exhaust duct 2 upstream of the evaporator element 8.

A further catalyst (not shown) is arranged upstream the heat absorbing element 9.

Besides that the exhaust gas generally is hotter in an upstream direction, i.e. closer to the engine (since heat leaves the system via the outer wall 5 of the exhaust duct 2), the location of the heat absorbing element 9 at the outer curve of the bend 2a makes it well exposed to the flow of exhaust gas. The heat absorbing element 9 will therefore acquire a relatively high temperature during operation of the combustion engine, higher than if it would be located further downstream and higher than if it would be located at the inner curve of the bend 2a or not in any bend at all. To determine where a relatively higher temperature can be expected in a certain system it is possible to make use of measurements by placing temperature sensors at various places and to make use of computer simulations.

In theory, the evaporator element 8 can be placed in the high-temperature position at the outer curve of the bend 2a. However, in a real system there are commonly a number of restrictions in the choice of where to place the injector/nozzle 6 and the evaporator element 8. For instance, it may not be enough space for arranging the reductant nozzle 6 in an appropriate way close to the bend 2a. Another restriction can be that the injector cannot withstand the high temperature at that position. Further, the pattern of the gas flow at the high-temperature position may be unsuitable for controlling the spray, which may lead to deposits of reductant on the outer wall etc.

To make use of the heat absorbed by the heat absorbing element 9, a heat transfer element 10 extends in the longitudinal direction of the exhaust duct 2 and is thermally connected to the heat adsorbing element 9 and the evaporator element 8 so as to transfer heat from the heat adsorbing element 9 to the evaporator element 8 during operation of the internal combustion engine. This way the evaporator element 8 gets warmer than it would be without the heat transfer element 10 and the heat absorbing element 9. Droplets of reductant that hit the evaporator element 8 will thereby evaporate in a more efficient manner. This is particularly advantageous in low-temperature situations, for instance where the engine works at a low load, where it conventionally is difficult to provide for an efficient evaporation of the reductant.

Heat insulating arrangements are provided between the evaporator element 8 and the outer wall 5 of the exhaust duct 2 as well as between the heat absorbing element 9 and the outer wall 5 to avoid cooling of these elements 8, 9 via the wall 5. The heat insulating arrangements may comprise a solid heat insulating material or may simple be a gap between the elements and the wall 5 where exhaust may be allowed to flow. In this example such gaps are formed by providing the elements 8, 9 with connecting plates 8a, 9a. Each plate 8a, 9b connects its corresponding element 8, 9 to the wall 5 via an edge thereof and forms a distance between the element 8, 9 and the wall. The connecting plates 8a, 9a extend in a longitudinal direction of the exhaust duct 2 so that exhaust gas can flow between the element 8, 9 and the wall 5.

The heat transfer element 10 is connected to the heat absorbing element 9 and the evaporator element 8 but not to the wall 5 in order to avoid heat losses.

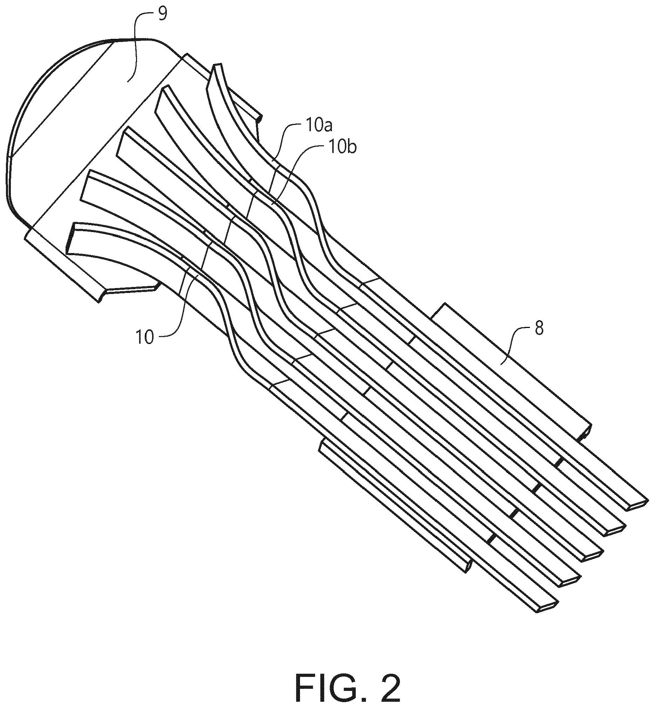

Figure 2 shows schematically the elements 8, 9 and 10 as seen from the left in figure 1. As indicated in figure 2, the heat absorbing element 9 and the evaporator element 8 has the form of more or less flat plates that are arranged more or less in parallel to the outer wall 5 of the exhaust duct 2.

As indicated in figures 1 and 2, the heat transfer element 10 comprises a number of guiding fins 10a, 10b (in this example five fins) extending side by side between the heat absorbing element 9 and the evaporator element 8 and being configured to transfer heat and to guide the flow of exhaust gas towards the evaporator element 8.

Each guide fin 10a, 10b forms a long and narrow plate and has an edge connected to heat absorbing element 9 and the evaporator element 8. The guiding fins also have the function of preventing or reducing splash of reductant droplets in a transversal direction of the exhaust duct 2.

The guiding fins 10a, 10b extend also downstream the evaporator element 8. Besides forming a downstream extension of the evaporator element 8 which enhances evaporation of reductant, the guiding fins 10a, 10b makes it possible to provide an exhaust gas flow pattern that enhances mixing of the evaporated reductant with the main flow of exhaust gas. The guiding fins 10a, 10b may for instance be bent, corrugated, provided with holes etc. to create turbulence that enhances mixing of the droplets with the exhaust gas or to delay the transport of the droplets and thereby provide time for evaporation.

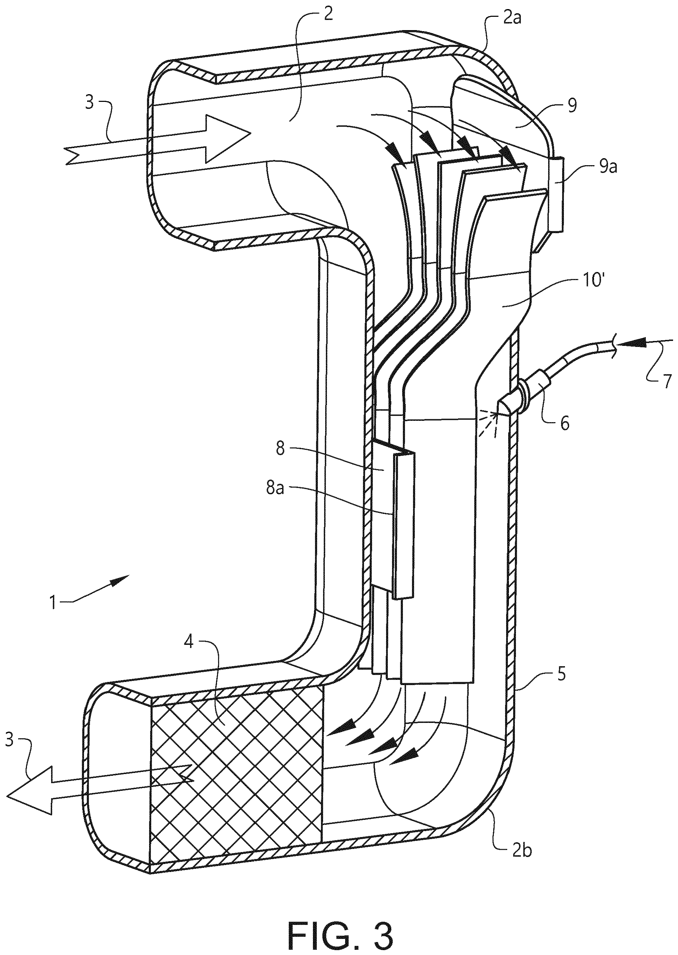

Figure 3 shows schematically a second embodiment of the invention. The difference compared with what is shown in figure 1 is that the inlet nozzle 6 and feed line 7 on the one hand and the evaporator element 8 and insulator 8a on the other hand have changed places so that the inlet nozzle 6 now is located on the same side of the exhaust duct 2 as the heat absorbing element 9. In turn this means that the heat transfer element, now denoted 10', extends not only in the longitudinal direction of the duct 2 but also across the exhaust duct 2 to the evaporator element 8 (and somewhat further downstream). Since the heat transfer element 10' is again formed of a set of guiding fins that forms open channels in between the main flow of exhaust gas through the duct 2 is not blocked by letting the heat transfer element 10' extend across the channel.

Generally, the inventive arrangement leads to a better evaporation and a more uniform distribution of the reductant. Besides a more efficient use of the reductant, an absence of reductant droplets, i.e. non-evaporated reductant, in the gas flow increases the lifetime of the SCR catalyst and reduces the risk of reductant deposits in the system.

## Claims

1. An exhaust gas aftertreatment system (1) for an internal combustion engine, said system comprising
- an exhaust duct (2) allowing a through-flow of exhaust gas;
- a catalytic NOx converter (4) arranged in the exhaust duct (2);
- a fluid inlet (6) arranged to introduce a liquid reductant into in the exhaust duct (2) upstream the catalytic NOx converter (4),
- a reductant evaporator element (8) arranged in the exhaust duct (2), wherein the fluid inlet (6) and the reductant evaporator (8) are arranged in relation to each other so that the reductant is introduced in a direction towards said evaporator element (8);
- a heat absorbing element (9) arranged in the exhaust duct (2) at a distance from the evaporator element (8) in a position where the temperature is higher than at the position of the evaporator (8) during operation of the internal combustion engine; and
- a heat transfer element (10) thermally connected to the heat absorbing element (9) and the evaporator element (8) so as to be capable of transferring heat from the heat adsorbing element (9) to the evaporator element (8) during operation of the internal combustion engine,
**characterized in**
**that** the heat absorbing element (9) is arranged upstream the evaporator element (8), wherein the heat transfer element (10) substantially extends in the longitudinal direction of the exhaust duct (2), and wherein the heat transfer element (10) comprises guiding fins (10a, 10b) configured to guide the flow of exhaust gas towards the evaporator element (8).

2. The exhaust gas aftertreatment system (1) according to claim 1, wherein the heat absorbing element (9) is arranged in association with a bend or curve (2a) of the exhaust duct (2).

3. The exhaust gas aftertreatment system (1) according to anyone of the above claims, wherein the heat absorbing element (9) comprises a substantially flat part that extends along an outer wall (5) of the exhaust duct (2).

4. The exhaust gas aftertreatment system (1) according to anyone of the above claims, wherein a heat insulating arrangement (9a) is provided between the heat absorbing element (9) and an outer wall (5) of the exhaust duct (2).

5. The exhaust gas aftertreatment system (1) according to anyone of the above claims, wherein the evaporator element (8) is arranged in association with an outer wall (5) of the exhaust duct (2), preferably a second heat insulator arrangement (8a) is provided between the evaporator element (8) and the outer wall (5) of the exhaust duct (2).

6. The exhaust gas aftertreatment system (1) according to anyone of the above claims, wherein the fluid inlet (6) is arranged in association with an outer wall (5) of the exhaust duct (2).

7. The exhaust gas aftertreatment system (1) according to claims 5 and 6, wherein the evaporator (8) and the fluid inlet (6) are arranged on opposite sides of the exhaust duct.

8. The exhaust gas aftertreatment system (1) according to anyone of the above claims, wherein the fluid inlet (6) is configured to introduce the reductant in a direction across the exhaust duct (2).

9. The exhaust gas aftertreatment system (1) according to anyone of the above claims, wherein the fluid inlet is a nozzle (6) configured to spray reductant into the exhaust duct (2).

10. The exhaust gas aftertreatment system (1) according to anyone of the above claims, wherein the guiding fins (10a, 10b) extend downstream the evaporator element (8).

## Patentansprüche

1. Abgasnachbehandlungssystem (1) für einen Verbrennungsmotor, wobei das System Folgendes umfasst
- einen Abgaskanal (2), der einen Abgasdurchfluss zulässt;
- einen NOx-Fahrzeugkatalysator (4), der im Abgaskanal (2) angeordnet ist;
- einen Fluideinlass (6), der angeordnet ist, um ein flüssiges Reduktionsmittel vor dem NOx-Fahrzeugkatalysator (4) in den Abgaskanal (2) einzuleiten,
- ein Reduktionsmittelverdampferelement (8), das im Abgaskanal (2) angeordnet ist, wobei der Fluideinlass (6) und der Reduktionsmittelverdampfer (8) in Bezug zueinander so angeordnet sind, dass das Reduktionsmittel in eine Richtung zum Verdampferelement (8) eingeleitet wird;
- ein wärmeabsorbierendes Element (9), das im Abgaskanal (2) in einem Abstand zum Verdampferelement (8) an einer Position angeordnet ist, an der die Temperatur höher ist als an der Position des Verdampfers (8) während des Betriebs des Verbrennungsmotors; und
- ein Wärmeübertragungselement (10), das thermisch mit dem wärmeabsorbierenden Element (9) und dem Verdampferelement (8) verbunden ist, um während des Betriebs des Verbrennungsmotors Wärme vom wärmeabsorbierenden Element (9) zum Verdampferelement (8) übertragen zu können,
**dadurch gekennzeichnet, dass** das wärmeabsorbierende Element (9) dem Verdampferelement (8) vorgelagert angeordnet ist, wobei sich das Wärmeübertragungselement (10) im Wesentlichen in Längsrichtung des Abgaskanals (2) erstreckt und wobei das Wärmeübertragungselement (10) Führungslamellen (10a, 10b) umfasst, die dazu ausgelegt sind, den Abgasstrom zum Verdampferelement (8) zu leiten.

2. Abgasnachbehandlungssystem (1) nach Anspruch 1, wobei das wärmeabsorbierende Element (9) in Verbindung mit einer Krümmung oder Kurve (2a) des Abgaskanals (2) angeordnet ist.

3. Abgasnachbehandlungssystem (1) nach einem der vorstehenden Ansprüche, wobei das wärmeabsorbierende Element (9) einen im Wesentlichen flachen Teil umfasst, der sich entlang einer Außenwand (5) des Abgaskanals (2) erstreckt.

4. Abgasnachbehandlungssystem (1) nach einem der vorstehenden Ansprüche, wobei eine wärmeisolierende Anordnung (9a) zwischen dem wärmeabsorbierenden Element (9) und einer Außenwand (5) des Abgaskanals (2) vorgesehen ist.

5. Abgasnachbehandlungssystem (1) nach einem der vorstehenden Ansprüche, wobei das Verdampferelement (8) in Verbindung mit einer Außenwand (5) des Abgaskanals (2) angeordnet ist, wobei vorzugsweise eine zweite wärmeisolierende Anordnung (8a) zwischen dem Verdampferelement (8) und der Außenwand (5) des Abgaskanals (2) vorgesehen ist.

6. Abgasnachbehandlungssystem (1) nach einem der vorstehenden Ansprüche, wobei der Fluideinlass (6) in Verbindung mit einer Außenwand (5) des Abgaskanals (2) angeordnet ist.

7. Abgasnachbehandlungssystem (1) nach Anspruch 5 und 6, wobei der Verdampfer (8) und der Fluideinlass (6) auf entgegengesetzten Seiten des Abgaskanals angeordnet sind.

8. Abgasnachbehandlungssystem (1) nach einem der vorstehenden Ansprüche, wobei der Fluideinlass (6) dazu ausgelegt ist, das Reduktionsmittel in eine Richtung quer zum Abgaskanal (2) einzuleiten.

9. Abgasnachbehandlungssystem (1) nach einem der vorstehenden Ansprüche, wobei der Fluideinlass eine Düse (6) ist, die dazu ausgelegt ist, Reduktionsmittel in den Abgaskanal (2) zu sprühen.

10. Abgasnachbehandlungssystem (1) nach einem der vorstehenden Ansprüche, wobei sich die Führungslamellen (10a, 10b) dem Verdampferelement (8) nachgelagert erstrecken.

## Revendications

1. Système de post-traitement de gaz d'échappement (1) pour un moteur à combustion interne, ledit système comprenant:
- un conduit d'échappement (2) permettant un écoulement du gaz d'échappement ;
- un convertisseur catalytique de NOx (4) disposé dans le conduit d'échappement (2) ;
- une entrée de fluide (6) agencée pour introduire un réducteur liquide dans le conduit d'échappement (2) en amont du convertisseur catalytique de NOx (4),
- un élément évaporateur de réducteur (8) disposé dans le conduit d'échappement (2), l'entrée de fluide (6) et l'évaporateur de réducteur (8) étant disposés l'un par rapport à l'autre de sorte que le réducteur est introduit dans une direction vers ledit élément évaporateur (8) ;
- un élément d'absorption de chaleur (9) disposé dans le conduit d'échappement (2) à distance de l'élément évaporateur (8) dans une position où la température est supérieure à celle au niveau de l'évaporateur (8) pendant le fonctionnement du moteur à combustion interne ; et
- un élément de transfert de chaleur (10) relié thermiquement à l'élément d'absorption de chaleur (9) et à l'élément évaporateur (8) de manière à être capable de transférer la chaleur de l'élément d'absorption de chaleur (9) à l'élément évaporateur (8) pendant le fonctionnement du moteur à combustion interne,
**caractérisé en ce que**
l'élément d'absorption de chaleur (9) est disposé en amont de l'élément évaporateur (8), l'élément de transfert de chaleur (10) s'étendant sensiblement dans la direction longitudinale du conduit d'échappement (2), et l'élément de transfert de chaleur (10) comprenant des ailettes de guidage (10a, 10b) conçues pour guider l'écoulement du gaz d'échappement vers l'élément évaporateur (8).

2. Système de post-traitement de gaz d'échappement (1) selon la revendication 1, dans lequel l'élément d'absorption de chaleur (9) est disposé en association avec un coude ou une courbe (2a) du conduit d'échappement (2).

3. Système de post-traitement de gaz d'échappement (1) selon l'une quelconque des revendications précédentes, dans lequel l'élément d'absorption de chaleur (9) comprend une partie sensiblement plate qui s'étend le long d'une paroi extérieure (5) du conduit d'échappement (2).

4. Système de post-traitement de gaz d'échappement (1) selon l'une quelconque des revendications précédentes, dans lequel un dispositif d'isolation thermique (9a) est prévu entre l'élément d'absorption de chaleur (9) et une paroi extérieure (5) du conduit d'échappement (2).

5. Système de post-traitement de gaz d'échappement (1) selon l'une quelconque des revendications précédentes, dans lequel l'élément évaporateur (8) est disposé en association avec une paroi extérieure (5) du conduit d'échappement (2), de préférence un second dispositif d'isolation thermique (8a) est prévu entre l'élément évaporateur (8) et la paroi extérieure (5) du conduit d'échappement (2).

6. Système de post-traitement de gaz d'échappement (1) selon l'une quelconque des revendications précédentes, dans lequel l'entrée de fluide (6) est disposée en association avec une paroi extérieure (5) du conduit d'échappement (2).

7. Système de post-traitement de gaz d'échappement (1) selon les revendications 5 et 6, dans lequel l'évaporateur (8) et l'entrée de fluide (6) sont disposés sur des côtés opposés du conduit d'échappement.

8. Système de post-traitement de gaz d'échappement (1) selon l'une quelconque des revendications précédentes, dans lequel l'entrée de fluide (6) est configurée pour introduire le réducteur dans une direction transversale au conduit d'échappement (2).

9. Système de post-traitement de gaz d'échappement (1) selon l'une quelconque des revendications précédentes, dans lequel l'entrée de fluide est une buse (6) configurée pour pulvériser un réducteur dans le conduit d'échappement (2).

10. Système de post-traitement de gaz d'échappement (1) selon l'une quelconque des revendications précédentes, dans lequel les ailettes de guidage (10a, 10b) s'étendent en aval de l'élément évaporateur (8).
